# EUROPEAN PATENT SPECIFICATION

(11) **EP 1 066 904 B1**
(45) Date of publication and mention of the grant of the patent: **13.04.2005**
(21) Application number: 00114671.1
(22) Date of filing: 07.07.2000
(51) Int. Cl.: B23D 19/06, B41F 27/12

(54) **Planographic printing plate cutting device and method**
Verfahren und Vorrichtung zum schneiden von Druckplatten
Méthode et dispositif pour couper des clichés d'impression

(30) Priority: 08.07.1999 JP 19420499
(43) Date of publication of application: 10.01.2001
(73) Proprietor: FUJI PHOTO FILM CO., LTD., Kanagawa-ken (JP)
(72) Inventor: Annoura, Yasuhiro, Yoshida-cho, Haibara-gun, Shizuoka-ken (JP)
(74) Representative: Grünecker, Kinkeldey, Stockmair & Schwanhäusser Anwaltssozietät

(56) References cited:
- GB-A- 1 322 151
- GB-A- 2 293 019
- US-A- 2 053 375

## Description

The present invention relates to a device for cutting a planographic printing plate according to the preamble of the independent claim 1 and to a method of cutting a planographic printing plate according to the preamble of the independent claim 15.

Generally, a photosensitive planographic printing plate (which is referred to as a PS plate hereinafter) is manufactured such that surface treatments such as graining, anodic oxidation, silicate treatment, and other chemical conversion treatments are applied, solely or in combination with each other, to a support such as an aluminum plate in sheet form or roll form, then, the support is subjected to coating with a light-sensitive solution and a drying process. Thereafter, the production process is completed by cutting the support into a desired size. This PS plate thus manufactured is subjected to a plate-making process such as an exposure, a development, or a gumming, is then set at a printer, and is coated with ink. As a result, letters, images, and the like are printed on the printing paper.

As the applicant of the present invention proposes in JP-A 10-42014, aside from a PS plate which has been disclosed in JP-A 10-100556, PS plates used as a so-called "key plate" may, for example, be included in the type of PS plate described above. In a case in which the PS plate is used as the key plate, because there is no need to use a light-sensitive layer, or not using the light-sensitive layer is preferable, a PS plate which is not coated with the light-sensitive layer is also included in PS plates of the type discussed here. Further, both surfaces of an aluminum support may be coated with the light-sensitive layer. Moreover, PS plates also include plates used as digital printing plates for photopolymer, thermal and other types of digital printing.

In printing using such a PS plate as described above, there are cases in which printing is effected on printing paper having a smaller size than the PS plate by using a general commercial printer. There are also cases in which, for example, as in printing of a news paper or the like, printing is effected on printing paper having a larger size than the PS plate. In the latter case, since the entire surface of the PS plate is used as a printing surface, there is a possibility that ink adhering to the lengthwise cut edge portions of the PS plate (the surrounding portions thereof) is printed on printing paper so that the printing paper has stains, causing a decrease in the commercial value of prints.

As a method of preventing the printing paper surface from being stained because of an excessive amount of ink on the PS plate, for example, there is known a method in which corners of the edge portions of the support made from aluminum are shaved with a file or a knife (as described in Japanese Patent Publication JP-B 57-46754 or a method in which the (lengthwise) cut surface of the PS plate is coated with an insensible fatty solution (as is disclosed in JP-B 62-61946).

As described in JP-A 62-19315, since burrs which are generated during the lengthwise cutting of the PS plate causes such staining as described above, there is proposed a method of preventing generation of the burrs at the printing surface side of the PS plate. Further, JP-A 7-32758 proposes that the lengthwise cut edge portion of the PS plate be formed in a curved shape toward the opposite side of the printing surface of the PS plate, leading to some improvement of the prevention of the generation of the burrs.

However, the above-described method in which the corners of the edge portions of the support are shaved with the file or the knife is inappropriate for mass processing, because the PS plates must be taken one at a time, and shaved. Further, if there are defects such as burrs or abrasions which may cause ink to adhere to the cut edge portions of the PS plate, ink sticks to the shaved portions, resulting in the printing paper surface being stained with ink, after all. Moreover, in the method where the lengthwise cut surface of the plate is coated with disensitizer, there may arise a problem in which the PS plates become adhered to each other, and handling thereof becomes difficult, leading to poor development thereof.

When the burrs are merely prevented from being generated at the printing paper side of the PS plate during the lengthwise cutting of the PS plate, the printing paper surface may still be stained depending on the printing conditions. Further, in a case in which the lengthwise cut edge portion of the PS plate is formed in a downward curved shape (toward the opposite side of the printing surface of the PS plate), although there is some improvement in prevention of generation of the burr, when the PS plate is conveyed on a plate-making device for carrying out an exposure and a development, a problem of the PS plate being caught in the device to thereby cause poor conveyance of the PS plate arises.

As measures to improve and replace the above-described methods, each of JP-A 5-104871, 8-11451, 9-53465, 9-53466, 9-323486,10-868, 8-192079, and 8-260028 discloses that it is effective to form an inclined portion (including a so-called shear drop) by using a slitter or a cutter at the edge corner portions of the surface treatment layer of the PS plate.

However, in forming an effective inclined portion in order to prevent the printing paper from being stained by a shearing process using the cutter or the slitter, large burrs may be generated at the rear surface (a surface of the PS plate which faces the surface on which the surface treatment layer is formed). When the burrs protrude from the rear surface of the PS plate, for example, when the PS plate is conveyed inside an exposure device, a problem arises in that the PS plate meanders and the burrs break and fall to thereby form debris, and the like.
A shearing process which is carried out such that the burrs have a desired standard value (i.e., a protrusion length at a degree that has no substantial effect) has been considered. However, even if the burrs are within a range of the standard value at an initial stage of the processing, as the shearing process is carried out repeatedly, the protrusion length of the burrs may exceed the standard value. In particular, although the protrusion length of the burrs is allowed to be less than or equal to 30 µm, it is preferably less than or equal to 10 µm. It is difficult to maintain this value when the shearing process is carried out repeatedly.

From GB-A-2 293 019 a device and a method as indicated above are known. Furthermore, a method for slitting metal strips has been shown from GB-A-1 322 151, wherein the edges of the slit strip are essentially free of burrs projecting from the main plain of the strip, both surfaces of the strip have been scored a predetermined line and the strip has been sheared along said line.

It is an objective of the present invention to improve a device for cutting a planographic printing plate as indicated above so as to facilitate a handling of a finished planographic printing plate.

This objective is solved according to the present invention by a device for cutting a planographic printing plate having opposite surfaces, comprising a first cutting blade; a second blade, wherein said planographic printing plate is receivable between said blades for cutting, said blades are adapted to be directed towards opposite surfaces of said plate and offset in a direction parallel to a printing surface of said printing plates and transverse to a cutting direction, and wherein an indentation forming section is situated only on one side of said planographic printing plate and adapted to press against a non-printing side of said plate as said plate is being cut, thereby forming in said non-printing side of said plate an indentation.

Here, the "surface direction" described herein is a direction along a surface of the planographic printing plate (i.e., the printing surface).

Thus, since the second cutting blade is disposed so as to be offset from the first cutting blade in the surface direction of the planographic printing plate, the planographic printing plate is clamped between the first cutting blade and the second cutting blade so as to apply a shearing force thereto, thus facilitating the cutting of the planographic printing plate.

Since the second cutting blade is offset from the first cutting blade, during the cutting of the plate, the burrs are generated at the rear surface of the planographic printing plate. However, the indentation is formed by the indentation forming means within the fixed region of the planographic printing plate which includes the burrs. For this reason, the protrusion amount of the burrs from the rear surface of the planographic printing plate is minimized (preferably, the burrs are prevented from protruding) as compared to a planographic printing plate at which such indentation is not formed. As a result, handling of the finished planographic printing plate is facilitated.

The "cutting" described in the present invention means that the planographic printing plate is cut at a predetermined position in the thickness direction thereof. For example, the cutting includes, other than a cutting of an elongated web of the photosensitive (planographic) printing plate in a widthwise direction thereof, a cutting of this elongated web in a lengthwise direction thereof (a so-called lengthwise cutting), a cutting of the web in a diagonal direction, and the like.

When the planographic printing plate is cut by being clamped in a thickness direction thereof, between the first cutting blade and the second cutting blade, the contact surface of the second cutting blade with the planographic printing plate is inclined by the sloped surface of the indentation forming section with respect to the surface of the planographic printing plate which the contact surface faces, in a direction in which the thickness of the planographic printing plate gradually decreases toward the predetermined position where cutting occurs (which will be referred to as "the cutting position", hereinafter). For this reason, at the cut edge portion of the planographic printing plate (a portion near the cutting position), the planographic printing plate gradually becomes thinner toward the cut edge surface, and the indentation is thereby formed. The burr is generated inside the inner portion of the indentation.

Accordingly, formation of the indentation by the indentation forming section can be carried out at the same time as the cutting of the planographic printing plate by using a pair of the cutting blades, thus enabling the planographic printing plate to be cut effectively.

Therefore, the contact surface of the second cutting blade may be inclined with respect to the plate by actively inclining the second cutting blade such that the second cutting blade itself is inclined as a whole. Alternatively, the contact surface of the second cutting blade with the plate may be formed as the inclined surface which is inclined, with respect to the surface of the planographic printing plate which the contact surface faces, in a direction in which the thickness of the planographic printing plate gradually decreases toward the cutting position. By forming the second cutting blade as such an inclined blade, since the second blade is used as the inclination forming section, the planographic printing plate cutting device can be structured more simply.

The contact surface of the second cutting blade with the planographic printing plate may be relatively inclined with respect to the surface of the planographic printing plate which the contact surface faces. Accordingly, the planographic printing plate may be held by the holding means, so as to be inclined with respect to the contact surface. Due to this structure, as the second cutting blade, an ordinary blade which is not equipped with the inclination blade can be used.

The aforementioned holding means can be a holding device or a supporting member (e.g., a holder, a supporting plate, or the like) for actively holding or supporting the planographic printing plate in a state in which the planographic printing plate is inclined with respect to the second cutting blade.

Alternatively, by making use of the shearing force generated when the planographic printing plate is clamped between the first cutting blade and the second cutting blade, the planographic printing plate can be held in an inclined state with respect to the second cutting blade. In this case, by making use of the shearing force generated between the first cutting blade and the second cutting blade, there is no need to use such holding devices and supporting members described above. Accordingly, the planographic printing plate cutting device can be structured more simply.

It is a further objective of the present invention to improve a method of cutting a planographic printing plate as indicated above so as to minimize a protrusion amount of a burr that is generated during the cutting of the planographic printing plate.

This objective is solved according to the present invention by a method of cutting a planographic printing plate comprising the step of cutting said plate between a pair of cutting blades, wherein it is provided the steps of forming an indentation in said plate, offsetting, in the step of cutting, the cutting blades from each other in a direction parallel to a printing surface of said printing plate and transverse to a cutting direction, and producing a burr in a region of said indentation by said step of cutting.

Either one of the planographic printing plate cutting step and the indentation forming step can be performed first. In a case in which the indentation forming step is carried out first, a position at which the burrs are generated by the planographic printing plate cutting step is estimated and the indentation is formed at this estimated position in the indentation forming step. Thereafter, the planographic printing plate is cut by the planographic printing plate cutting step.

In this case, when the burrs are generated at the planographic printing plate during the cutting, since these burrs are generated inside the inner portion of the indentation which has been formed in advance by the indentation forming step, the protrusion length of the burrs from the rear surface of the planographic printing plate becomes shorter (preferably, the burrs cease to protrude).

On the other hand, in a case in which the planographic printing plate cutting step is carried out first, in the vicinity of the burrs which are generated in the planographic printing plate cutting step, the indentation is formed by the indentation forming process. Therefore, also in this case, since the burrs are generated from the indented portion, the protrusion length of the burrs from the rear surface of the planographic printing plate becomes shorter (preferably, the burrs cease to protrude).

Moreover, the planographic printing plate cutting method as described above is carried out by using the above mentioned planographic printing plate cutting device. In this case, the planographic printing plate cutting step and the indentation forming step are performed at the same time so that the planographic printing plate can be cut effectively.

Further preferred embodiments of the present invention are laid down in the further subclaims.

In the following, the present invention is explained in greater detail by means of several embodiments thereof in conjunction with the accompanying drawings, wherein:
Fig. 1 is a perspective view illustrating a PS plate processing line having a slitter of a first embodiment,
Fig. 2 is a front view illustrating the slitter of the first embodiment,
Fig. 3 is a partially enlarged cross-sectional view of the slitter of the first embodiment,
Fig. 4 is a partially enlarged cross-sectional view of the PS plate cut by the slitter of the first embodiment,
Fig. 5 is a partially enlarged front view of a slitter of a second embodiment,
Fig. 6 is a front view illustrating a slitter of a third embodiment,
Fig. 7 is a partially enlarged cross-sectional view of the slitter of the third embodiment,
Fig. 8 is a partially enlarged cross-sectional view of a cutter of a fourth embodiment,
Fig. 9 is a cross-sectional view of a cutter of a fifth embodiment,
Fig. 10 is a partially enlarged cross-sectional view of the cutter of the fifth embodiment,
Fig. 11 is a partially broken and enlarged front view of a planographic printing plate cutting device of a sixth embodiment,
Fig. 12 is a front view illustrating an overall structure of a slitter of a seventh embodiment,
Fig. 13 is a partially broken front view illustrating the slitter of the seventh embodiment,
Fig. 14A is a partially broken front view illustrating a pressing portion of a planographic printing plate cutting device according to an eighth embodiment,
Fig. 14B is a partially broken front view illustrating a cutting portion of the planographic printing plate cutting device according to the eighth embodiment,
Fig. 15A is a partially broken front view illustrating a pressing portion of a planographic printing plate cutting device according to a ninth embodiment
Fig. 15B is a partially broken front view illustrating a cutting portion of the planographic printing plate cutting device according to the ninth embodiment.

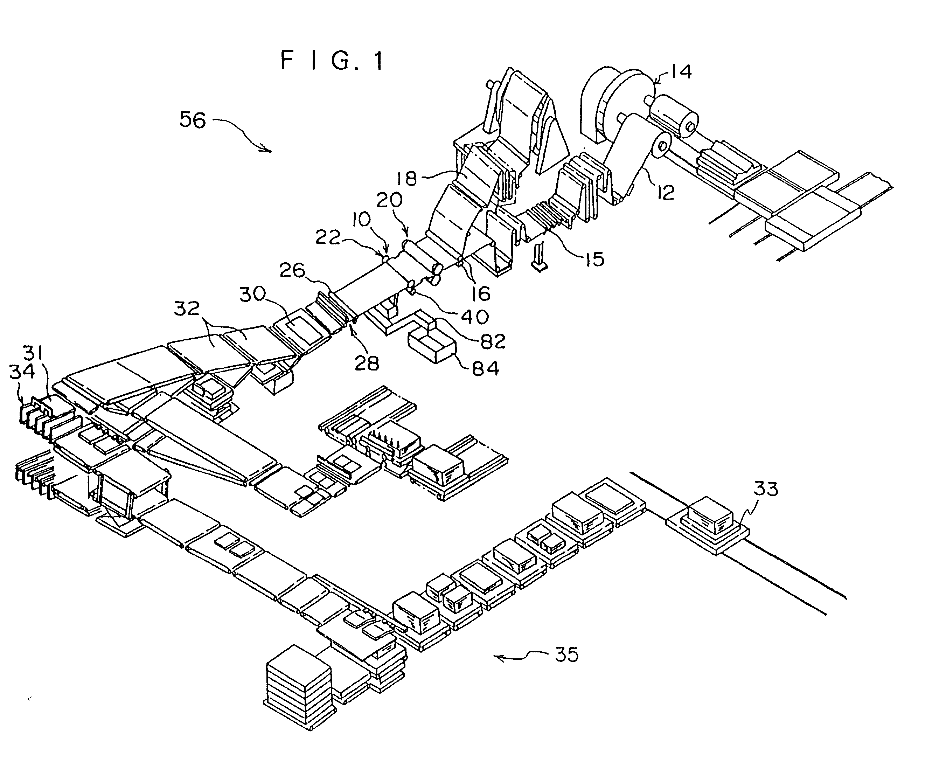

In Fig. 1, there is shown a PS plate processing line 56 having a slitter 10 (i.e., a cutting device) which is a planographic printing plate cutting device according to a first embodiment.

At an upstream side of this processing line 56 (at the upper right side in Fig. 1), there is provided a feed-out device 14 in which a web wound in a roll in advance is unwound sequentially. An elongated web 12 is fed out from the feed-out device 14. The curl of the web 12 is straightened by a leveler 15. When the web 12 reaches a feed-roller 16, a double paper 18 and the web 12 are laminated, and adhered to each other by electric charge, and then sent to a notcher 20.

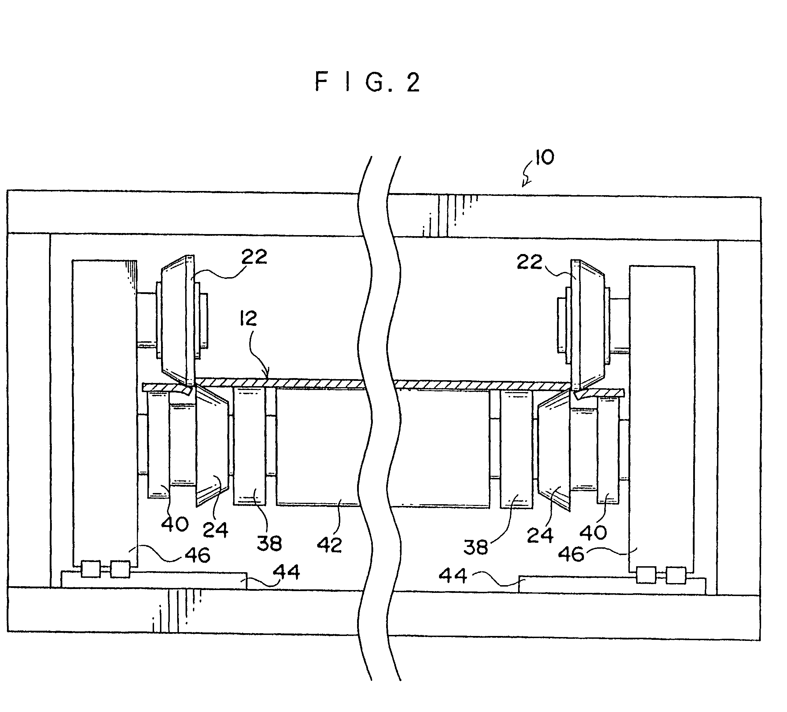

The notcher 20 forms blank portions on the web 12, thus allowing an upper blade 22 and a lower blade 24 (see Fig. 2) of the slitter 10 to be movable in a widthwise direction of the web 12 at positions of the web 12 where the blank portions are formed. Therefore, the cutting width of the web 12 can be controlled during the web 12 and the double paper 18, superposed with each other, are continuously cut.

Then, a feeding length of the web 12 which has been cut at a predetermined width is detected by a length measuring device 26. The web 12 is cut by a cutter 28 at an indicated timing. Accordingly, a PS plate 30 of a predetermined size is manufactured.

Next, the PS plate 30 is conveyed by a-conveyer 32 and fed to a stacking section 34. A predetermined number of the PS plates 30 are piled up at the stacking section 34 to thereby form a stack 31. Further, at the stacking section 34, a top, a bottom, or one side of the stack 31 can be equipped with a protection sheet (which is generally referred to as a "back board") made from card board or the like.

The stack 31 is passed through a conveying section 35, piled up on a pallet 33, and then sent to a storage box such as a rack house or to a packaging process where the stack 31 is packaged by packaging materials (such as tapes, interior packaging materials, and exterior packaging materials). Further, the stack 31 can also be piled up on a skid (such as a flat-base skid or an upright skid) for an automatic plate-making device. When the stack 31 is packaged in a state of being piled up on the skid, the processing line 56 may have a stacking device for stacking the stack 31 in the skid so that within the processing line 56, the stack 31 can be stacked directly in the skid.

In this way, the PS plate 30 is packaged, and shipped. However, depending the way in which the PS plate 30 is packaged, the double paper 18 or other packaging materials may be unnecessary.

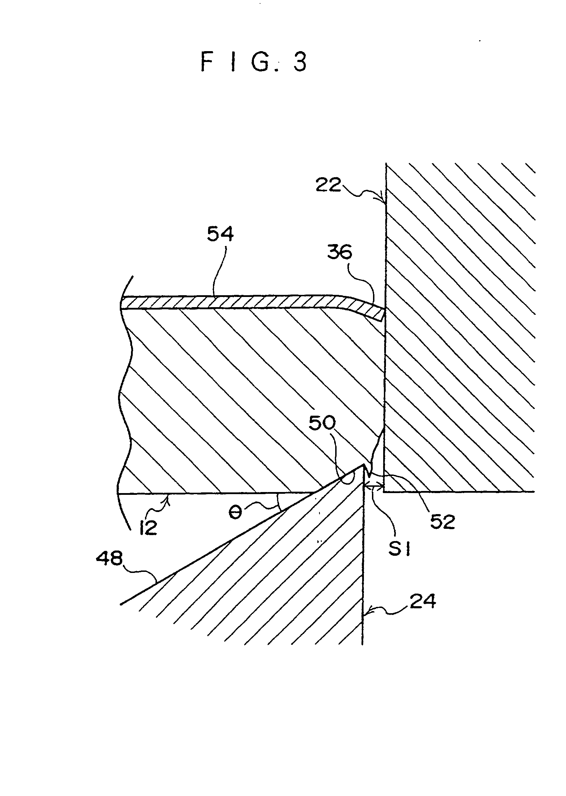

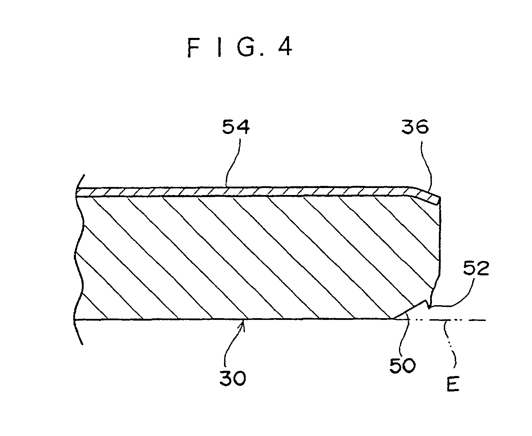

As shown in Fig. 2, the slitter 10 has a spacer 38, the lower blade 24, and a receiving ring 40 which are disposed in this sequential order, outwardly from a central receiving roll 42. The receiving roll 42, the spacer 38, the lower blade 24, and the receiving ring 40 rotate integrally with each other. Further, the receiving roll 42 and the spacer 38 have the same diameter, and the web 12 is conveyed on them in a state in which the uppermost surface of the web 12 is a light-sensitive layer 54 (see Figs. 3 and 4).

In an upper diagonal direction of the lower blade 24, the upper blade 22 is disposed which is formed in a substantially flat trapezoidal shape as viewed from the front. The upper blade 22 is rotated in a direction opposing the direction in which the lower blade 24 is rotated so as to clamp the web 12 being conveyed therebetween and cut the web 12 at a predetermined position thereof. Further, the upper blade 22 and the lower blade 24 are mounted to a base 46 which is movable along a rail 44 in the widthwise direction of the web 12.

As shown in detail in Fig. 3, the lower blade 24 is offset from the upper blade 22 to the widthwise direction central portion of the web 12 (in the widthwise direction of the web 12) by a predetermined offset amount 51. Accordingly, a shearing force is effectively made to act upon the web 12 so that the web 12 is cut in a lengthwise direction thereof.

The lower blade 24 is formed in a substantially flat conical shape and has a lower blade outer peripheral surface 48 which inclines at a predetermined angle of incline 9 with respect to a rear surface 12B of the web 12 (a surface of the web 12 facing the lower blade 24). As the lower blade 24 gradually leaves the predetermined (cutting) position at which the web 12 is cut in the widthwise direction of the web 12 (namely, toward the widthwise direction central portion of the web 12), it gradually moves away from the rear surface 12B of the web 12. Therefore, in the vicinity of the lengthwise cut edge portion of the web 12, during the cutting, an indentation 50 is formed by the lower blade outer peripheral surface 48, and a portion near the cut edge portion of the web 12 is recessed with respect to the rear surface 12B such that the thickness of the web 12 gradually decreases toward the cut edge surface of the web 12.

In the slitter 10 of the first embodiment, the web 12 being conveyed is clamped between the upper blade 22 and the lower blade 24 due to the rotation thereof. The shearing force is made to act upon the web 12 so that the web 12 is cut at a predetermined cutting position.

At this time, since the upper blade 22 is offset outwardly in the widthwise direction of the web 12 from the lower blade 24 by a predetermined offset amount S1, as is shown in Fig. 4, an inclined portion 36 (a so-called shearing drop) in which the thickness of the PS plate 30 decreases toward a rear side thereof is formed at (the vicinity of) the lengthwise cut edge portion of the surface of the PS plate 30. For this reason, during printing, an excessive amount of ink is prevented from adhering to the edge portion of the PS plate 30 and from being transferred onto printing paper. As a result, print of high commercial value can be maintained.

Since the lower blade outer peripheral surface 48 of the lower blade 24 inclines at a predetermined angle of incline θ with respect to the rear surface 12B of the web 12, the indentation 50 is formed by the outer peripheral surface 48, by cutting, at the lengthwise cut edge portion of the web 12, and a portion in the vicinity of the lengthwise cut edge surface of the web 12 is recessed toward the rear surface 12B in the thickness direction of the web 12. As can be seen from Fig. 4, since a burr 52 which is formed at the rear surface 12B side of the PS plate 30 is generated from the indentation 50, i.e., from the concave portion which is the portion near the cut edge surface of the web 12 and is recessed toward the rear surface 12B of the PS plate 30, a tip end of the burr 52 does not protrude from the rear surface 12B (more precisely, from an extended surface E which extends from the rear surface 12B and which is shown in a double-dashed line in Fig. 4). Consequently, for example, in a case in which the PS plate 30 is conveyed inside an exposure device, problems of the PS plate 30 meandering, the burr breaking and falling to thereby form debris, and the like do not arise. As a result, the PS plate 30 which facilitates handling can be manufactured.

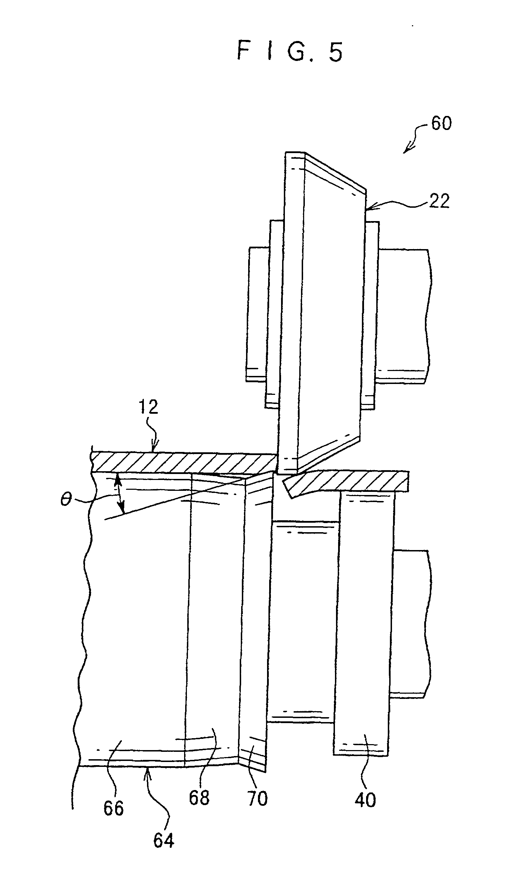

In Fig. 5, a slitter 60 of a second embodiment which is partially enlarged is illustrated.

In the second embodiment the overall structure of each of the slitter 60 and the processing line 56 is substantially the same as that of the slitter 10 in the first embodiment except that the configuration of a lower blade 64 is different from that of the lower blade 24 of the first embodiment. Therefore, portions identical to those shown in the first embodiment are denoted by the same reference numerals, and a description thereof will be omitted.

The lower blade 64 according to the second embodiment is structured by a cylindrical surface 66 having a fixed radius, a reduced diameter surface 68 whose diameter is gradually reduced from the end portion of the cylindrical surface 66, and a press-contact surface 70 whose diameter is gradually increased from the end portion of the reduced diameter surface 68, which are disposed sequentially from the widthwise direction central side of the web 12 (from the left side of Fig. 5). The diameter of the cylindrical surface 66 is the same as that of each of the receiving roll 42 and the spacer 38 (see Fig. 1). Further, the press-contact surface 70 is inclined at a predetermined angle of incline θ with respect to the rear surface 12B of the web 12.

In the same manner as the slitter 10 of the first embodiment, in the slitter 60 of the second embodiment having such a lower blade 64, when the web 12 is cut (lengthwise) by the upper blade 22 and the lower blade 64, as shown in Fig. 4, at the lengthwise cut edge portion of the surface of the PS plate 30 and in the vicinity thereof, the inclined portion 36 in which the thickness of the web 12 decreases toward the rear surface thereof.

When the web 12 is cut in the lengthwise direction thereof, the indentation 50 is formed at the edge portion of the web 12 by the press-contact surface 70. Since the burr 52 at the rear surface 12B side of the PS plate 30 is generated from this indentation 50, the tip end of the burr 52 does not protrude from the rear surface 12B (more precisely, from the extended surface E which extends from the rear surface 12B).

In the slitter 60, together with the receiving roll 42 and the spacer 38, the cylindrical surface 66 having the same diameter as each of the receiving roll 42 and the spacer 38 supports the web 12 at the lengthwise cut edge portion thereof, and the shearing force is thereby effectively applied to the lengthwise cut portion of the web 12.

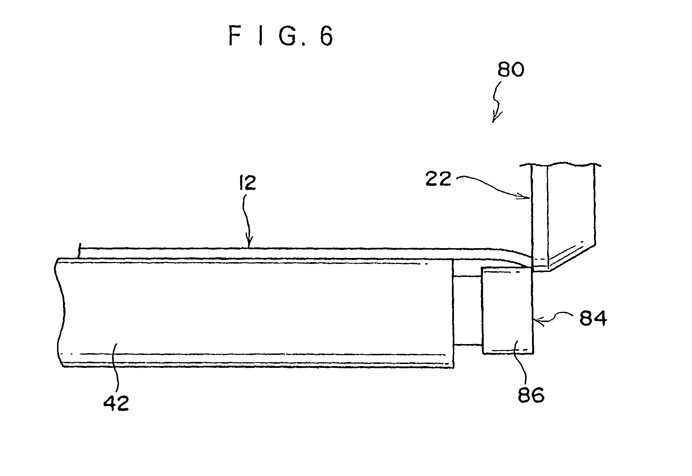

In Fig. 6, is shown a main portion of a slitter 80 according to a third embodiment. In the third embodiment the overall structure of each of the slitter 80 and the processing line 56 is substantially the same as that of the slitter 10 of the first embodiment except that the structure of a lower blade 84 is different from that of the lower blade 24 of the first embodiment. Therefore, portions identical to those shown in the first embodiment are denoted by the same reference numerals, and a description thereof will be omitted.

The lower blade 84 according to the third embodiment is different from that in the first or second embodiment. Namely, the lower blade 84 has a lower blade outer peripheral surface 86 which is formed in a cylindrical shape having a fixed diameter. Further, the lower blade outer peripheral surface has a predetermined diameter which is smaller than the diameter of the receiving roll 42. Also, in Fig. 6, there is shown the slitter 80 of a type which is not equipped with the spacer 38 (see Fig. 1). However, in the same manner as in the first or second embodiment, the slitter 80 can be equipped with the spacer 38.

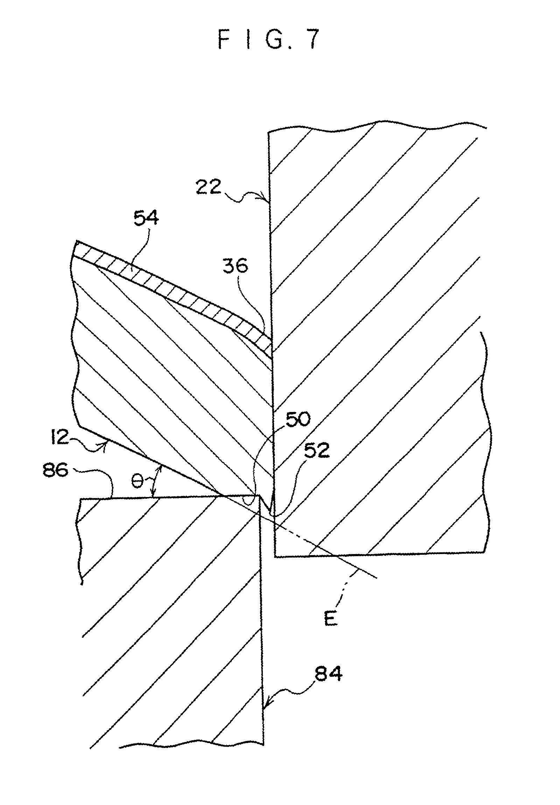

When the web 12 is cut (lengthwise) by using the slitter 80 having the lower blade 84 of the third embodiment, since the lower blade 84 has a diameter which is smaller than the receiving roll 42, during the lengthwise cutting, the shearing force from the upper blade 22 allows the portion in the vicinity of the lengthwise cut edge surface of the web 12 to curve toward the lower blade 84. For this reason, as shown in detail in Fig. 7, at the portion in the vicinity of the lengthwise cut edge surface of the web 12, the rear surface 12B is inclined with respect to the lower blade outer peripheral surface 86, and the relative positional relationship between the web 12 and the lower blade outer peripheral surface 86 of the lower blade 84 is substantially the same as in the first or second embodiment. Therefore, during the cutting, at the lengthwise cut edge of the web 12, the indentation 50 is formed by the lower blade outer peripheral surface 86, and since the burr 52 at the rear surface 12B side of the PS plate 30 is generated from this indentation 50, the tip end of the burr 52 does not protrude from the rear surface 12B (more precisely, from the extended surface E which extends from the rear surface 12B).

In the same manner as the slitter 10 in the first embodiment, when the web 12 is cut lengthwise by the upper blade 22 and the lower blade 84, at the cut edge of the surface of the PS plate 30, and a portion in the vicinity of the cut edge portion, is formed the inclined portion 36 in which the thickness of the PS plate 30 decreases toward the rear surface 12B.

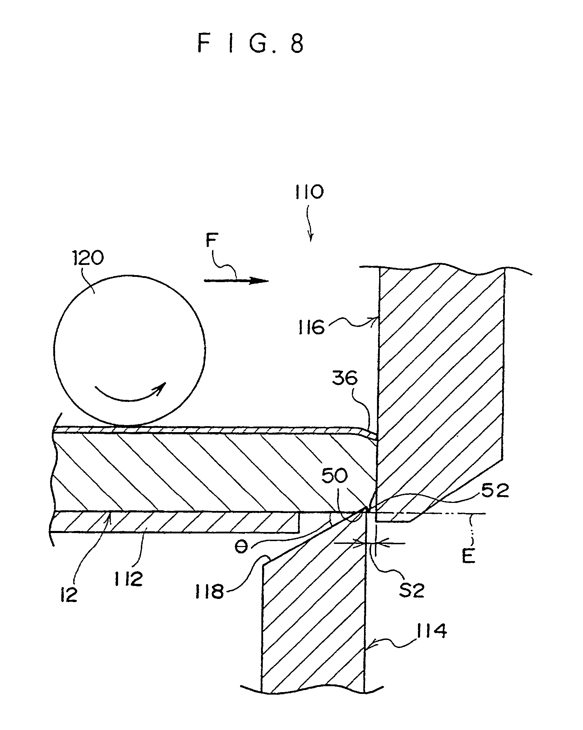

In Fig. 8, there is shown a cutter 110 (i.e., a widthwise cutter) which is a planographic printing plate cutting device according to a fourth embodiment. In the fourth embodiment, there is provided the processing line 56 (see Fig. 1) of the PS plate which has substantially the same structure as that in the first embodiment. However, the structure of the cutter 110 is different from that in the first embodiment. On the other hand, portions identical to those shown in the first embodiment are denoted by the same reference numerals, and a description thereof will be omitted.

The cutter 110 includes a receiving platform 112 for supporting the web 12 being conveyed, a cutting lower blade 114 which is provided at a conveying direction downstream side of the receiving platform 112 (in a direction of arrow F), and a cutting upper blade 116 which is disposed at a downstream side of the cutting blade 114 so as to be offset by a predetermined offset amount S2. The cutting lower blade 114 is not movable in a vertical direction. However, the cutting upper blade 116 is supported by an unillustrated supporting device so as to be movable in the vertical direction.

A contact surface 118 (i.e., a contact surface with the web 12) of the cutting lower blade 114 is formed so as be inclined at a predetermined angle of incline θ with respect to the rear surface 12B of the web 12, thereby gradually spaced from the rear surface 12B from a downstream side to an upstream side in the conveying direction of the web 12.

In the cutter 110 of the fourth embodiment which has been structured as described above, the cutting upper blade 116, by moving downward, clamps the web 12, and the shearing force is made to act upon the web 12 so as to cut the web 12 at a predetermined position. At this time, at the cut edge of the surface of the PS plate 30, and in the vicinity thereof, is formed the inclined portion 36 (a so-called "shear drop") in which thickness of the PS plate 30 decreases toward the rear surface thereof.

Since the contact surface 118 of the cutting lower blade 114 inclines at a predetermined angle of incline θ with respect to the rear surface 12B of the web 12, at the cut edge of the web 12, during the cutting, the indentation 50 is formed by the contact surface 118, and a portion in the vicinity of the cut edge of the web 12 is recessed such that the thickness of the PS plate 30 decreases toward the cut edge (surface) of the web 12. Since the burr 52 at the rear surface 12B side of the PS plate 30 is generated from this indentation 50, i.e., from the concave portion of the web 12 which is indented with respect to the rear surface 12B of the PS plate 30, the tip end of the burr 52 does not protrude from the rear surface 12B (more precisely, from the extended surface E which extends from the rear surface 12B). Therefore, for example, in a case in which the PS plate 30 is conveyed inside the exposure device, problems of the plate meandering, the burr breaking and falling to thereby form debris, and the like do not occur. As a result, the PS plate 30 which facilitates handling can be manufactured.

In the fourth embodiment, a case of the cutter 110 has been explained as an example. However, for example, in the present embodiment, a slitter having a similar structure as in the first embodiment can be formed by providing an upper blade and a lower blade each of which is formed as a roller and which has substantially the same cross-sectional configuration as each of the cutting upper blade 112 and the cutting lower blade 114 in the cutter 110. In both cases of a slitter and a cutter, as shown in Fig. 8, it is preferable that the web 12 on the receiving platform 112 is fixed by a fixing means such as a fixing jig 120 or a holding mechanism to thereby prevent the web 12 from unexpectedly shifting from the receiving platform 112 during the cutting. As such a holding mechanism, there can be provided a belt, a finger, or a ring spacer which holds the web 12 while moving along the web 12 at the same moving speed as the conveying speed of the web 12, and a fixing roller which rotates at the same speed as the conveying speed thereof. In this way, by making the holding mechanism move or rotate at the same speed as the speed with which the web 12 moves, the web 12 can be fixed to the receiving platform 112 without damaging the light-sensitive layer 54 of the web 12. Further, in the case of the slitter, the web 12 can be conveyed while a portion of the web 12 is wound around the cutting lower blade 114, or the like.

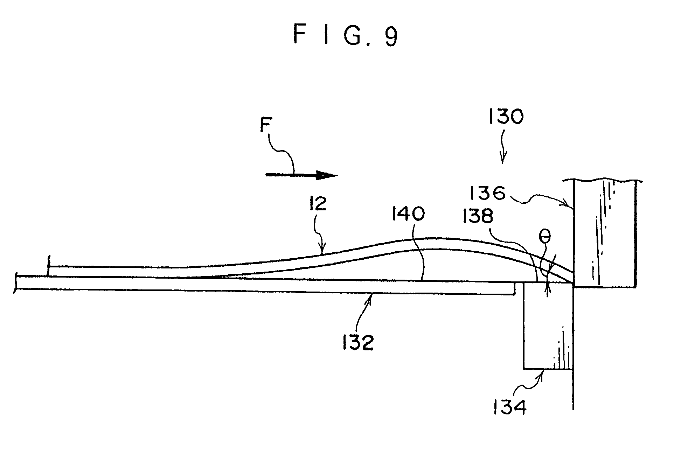

In Fig. 9, there is shown a cutter 130 which is a planographic printing plate cutting device according to a fifth embodiment. In the fifth embodiment, there is provided the processing line 56 (see Fig. 1) of the PS plate which has substantially the same structure as in the first embodiment. However, the structure of the cutter 130 of the fifth embodiment is different from that of the first embodiment. On the other hand, portions identical to those shown in the first embodiment are denoted by the same reference numerals, and a description thereof will be omitted.

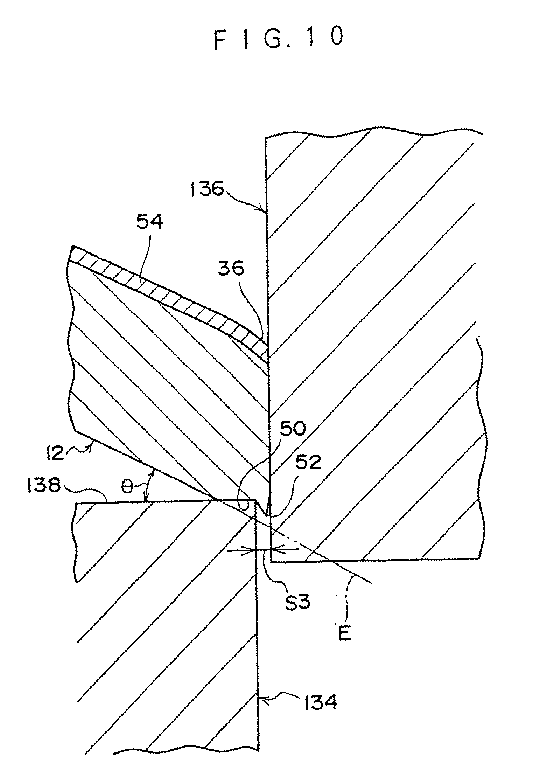

The cutter 130 has a receiving platform 132 which supports the conveyed web 12, a cutting lower blade 134 which is disposed at a downstream side of the receiving platform 132 in the conveying direction of the web 12 (in the direction of arrow F), and a cutting upper blade 136 which is disposed at a downstream side of the cutting lower blade 134 so as to be offset by a predetermined offset amount S3 (see Fig. 10). The cutting lower blade 134 is not movable in a vertical direction. However, the cutting upper blade 136 is supported by an unillustrated supporting device so as to be movable in the vertical direction.

The contact surface 138 of the cutting lower blade 134, being different from the contact surface 118 of the fourth embodiment, has the same height as a supporting surface 140 of the receiving platform 132, and is formed parallel to the rear surface 12B of the web 12.

As shown in Fig. 10, the offset amount S3 between the cutting upper blade 136 and the cutting lower blade 134 is set at a predetermined amount, such that, when the web 12 is cut, the shearing force is made to act upon the web 12 so as to enable a portion near the cut edge of the web 12 to curve in a form of an upward convex.

When the web 12 is cut by the cutter 130 of the fifth embodiment which has been structured as described above, as shown in Fig. 10, at a portion in the vicinity of the cut edge of the web 12, the rear surface 12B of the web 12 thus curved is inclined against the contact surface 138, and the relative positional relationship between the web 12 and the contact surface 138 of the cutting lower blade 134 is the same as in the case of the fourth embodiment. At the cut edge of the web 12, during the cutting, the indentation 50 is formed by the contact surface 138, and since the burr 52 at the rear surface 12B side of the PS plate 30 is generated from this indentation 50, the tip end of the burr 52 does not protrude from the rear surface 12B (more precisely, from the extended surface E which extends from the rear surface 12B).

In the same manner as the slitter 10 of the first embodiment, or the cutter 130 of the fourth embodiment, when the web 12 is cut by the cutting upper blade 136 and the cutting lower blade 134, at the cut edge portion of the surface of the PS plate 30 and a portion in the vicinity of the cut edge, the inclined portion 36 in which the thickness of the PS plate 30 decreases toward the rear surface is formed.

A so-called single cutter (i.e., a cutter which further cuts the PS plate 30 which has been subjected to the initial state of the cutting in the processing line 56 (see Fig. 1)) which has the same structure as the cutter 110 of the fourth embodiment or the cutter 130 of the fifth embodiment may be used. In this case, the PS plate 30 is placed on the receiving platform 112 or 132, and is cut when stopped thereon and is not being conveyed. Further, because the PS plate 30 is stopped, when the receiving platform is equipped with the fixing means such as the fixing jig 120, or the holding mechanism as in shown in Fig. 8, there is no need to move or rotate these fixing means and the holding mechanism so as to be in synchrony with the conveying speed of the PS plate 30. As a result, the structure of the fixing means or the holding mechanism becomes simplified.

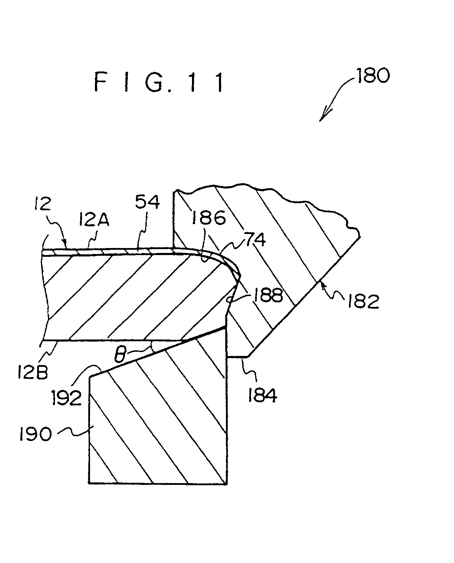

In Fig. 11, there is shown a planographic printing plate cutting device 180 of a sixth embodiment, with a portion thereof being enlarged.

An upper blade 182, which forms a part of the planographic printing plate cutting device 180, is formed as a whole, in a flat conical shape, and an outer peripheral end of the upper blade 182 is a cutting blade portion 184. Further, at a diametrical direction inner side of the cutting blade portion 184 (of the conical shape of the upper blade 182) (that is, an upper side of Fig. 11), is formed an inclination portion 186 whose diameter gradually decreases toward the widthwise direction inner side of the surface of the web 12 (that is, at the left side of Fig. 11). A concave escape portion 188 in which the thickness of a portion of the upper blade 182 decreases outwardly therefrom is formed so as to be continuous with the inclination portion 186.

A lower blade 190, which has a predetermined distance between the cutting blade portion 184 and itself, is provided so as to correspond to the upper blade 182. The lower blade 190 is formed substantially in the same configuration as the lower blade 24 of the first embodiment, and has a lower blade outer peripheral surface 192 which is formed so as to incline at a fixed angle of incline.

In the planographic printing plate cutting device 180 of the sixth embodiment which has been structured as described above, when the web 12 is cut by the upper blade 182, in a similar manner to the first embodiment, since the indentation 50 is formed by the lower peripheral surface 192, the tip end of the burr 52 (see Fig. 4) does not protrude from the rear surface 12B of the web 12.

During the cutting, the web 12 is pressed by the inclination portion 186 of the upper blade 182 from the surface 12A side thereof so as to form an inclined portion 74 in which the thickness of the web 12 gradually decreases toward the cut edge portion of the web 12. Accordingly, when the PS plate 30 obtained from this web 12 is used to print an image thereon, ink adhesion to the lengthwise cut edge portion of the PS plate 30 is prevented, thus the printing paper is not stained with the ink. As a result, print having excellent appearance can be maintained.

Deformation flow of the web 12 which is caused when the web 12 is pressed by the inclination portion 186 is allowed because aluminum which forms the web 12 fits into the concave escape portion 188. For this reason, even with a small amount of pressure, the inclined portion 74 can be formed at the web 12.

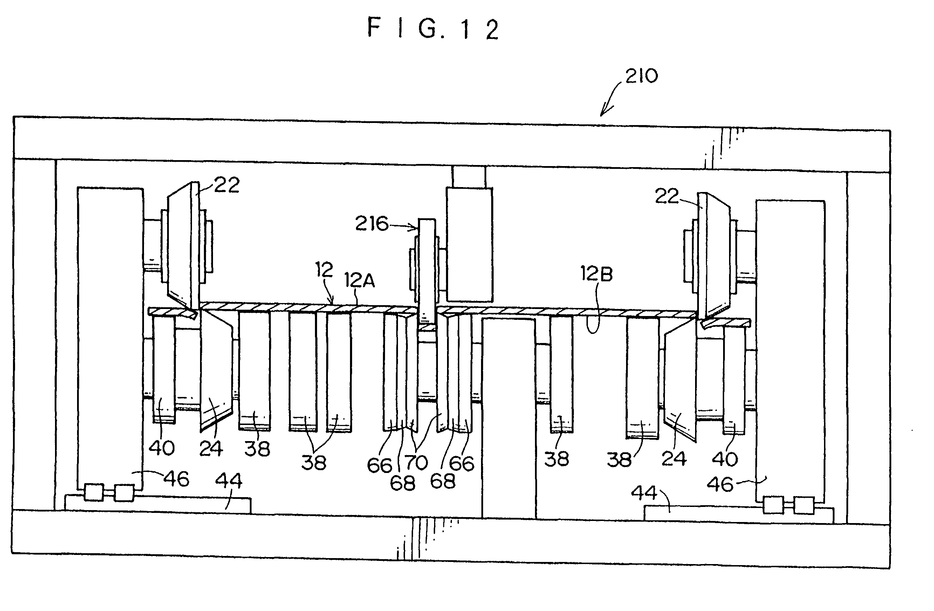

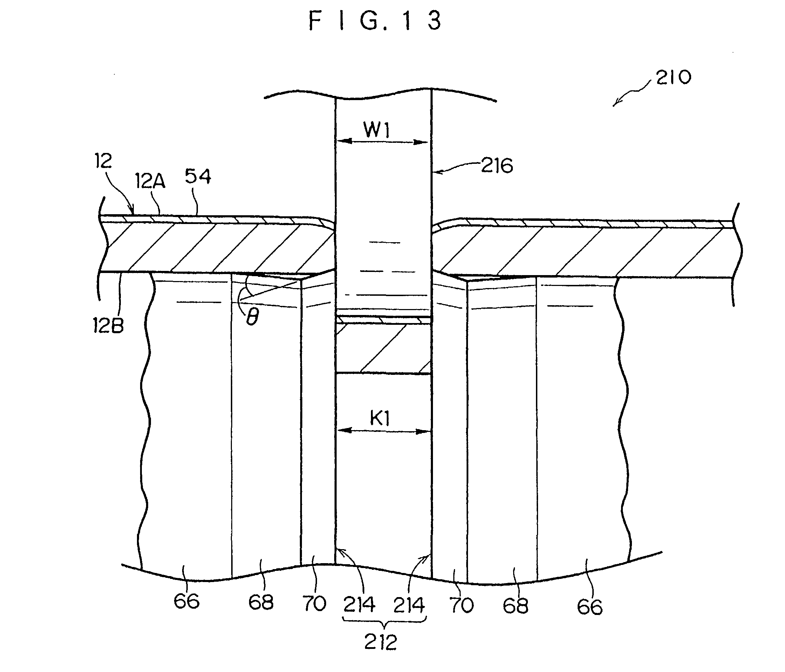

In Fig. 12 and Fig. 13, there is shown a slitter 210 (a planographic printing plate cutting device) of a seventh embodiment. In the first to sixth embodiments, there have been shown cases in which the web 12 is cut in the vicinity of the widthwise direction ends thereof. However, in the present seventh embodiment, there is shown a case in which the web 12 is cut at a widthwise direction central position thereof.

In the same manner as the lower blade 64 (see Fig. 5) of the second embodiment, a lower blade 212 of the seventh embodiment is formed by cutting lower blades 214 in which the cylindrical surface 66, the reduced diameter surface 68, and the press-contact surface 70 are disposed in this sequential order, respectively, with the press-contact surface 70 being made the innermost and having a predetermined distance K1 therebetween.

A cutting upper blade 216 of the seventh is formed in a flat cylindrical shape (or a column shape) having a width W1 which is the same as, or less than, the distance K1 between the cutting lower blades 214.

As seen from Fig. 12, the upper blade 22, the lower blade 24, the spacer 38, and the receiving ring 40, which have substantially the same structure as those of the first embodiment, are provided, respectively, in the vicinity of the widthwise direction ends of the web 12.

In the slitter 210 of the seventh embodiment which is structured as described above, when the web 12 is in the state of being supported by the cutting lower blade 214, the cutting upper blade 216 is inserted between the cutting lower blades 214 so that the web 12 is cut at the central portion thereof. Therefore, the web 12 is divided in a widthwise direction so that a desired size of the PS plate 30 can be effectively obtained. Since, the indentation 50 (see Fig. 4), which is almost the same as that of the first embodiment, is formed by the press-contact surface 70 at both sides of the cut portion of the web 12 which has been cut by the cutting upper blade 216, the tip end of the burr 52 of the PS plate 30 does not protrude from the rear surface 12B.

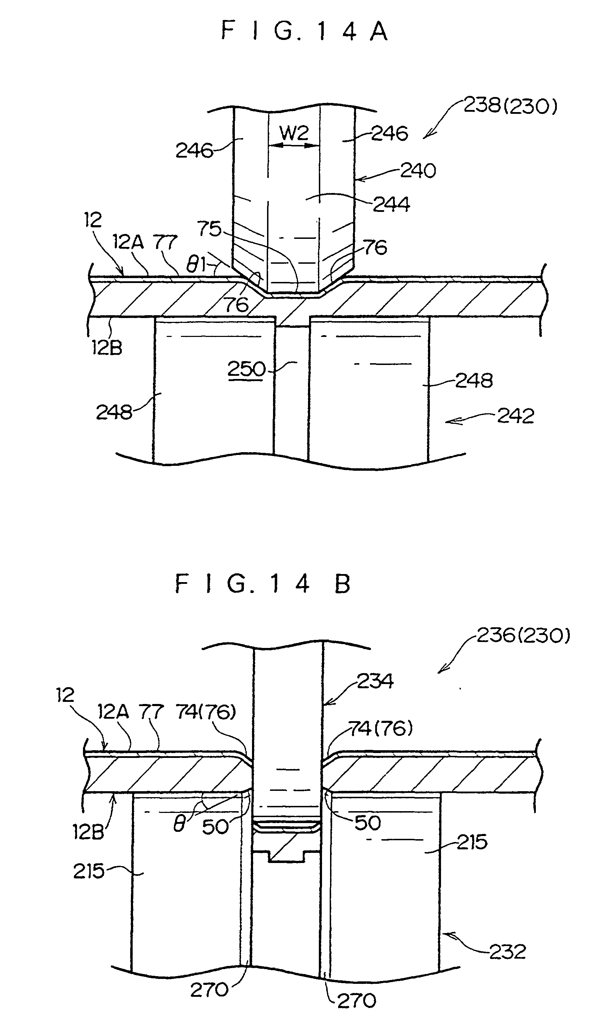

In Figs. 14A and 14B, respectively, there is shown a planographic printing plate cutting device 230 of an eighth embodiment. In the same manner as the slitter 210 of the seventh embodiment, the planographic printing plate cutting device 230 is shown in a state in which the web 12 is cut in the widthwise direction central portion thereof.

In the planographic printing plate cutting device 230 of the eighth embodiment, in addition to a cutting portion 236 (see Fig. 14B), there is provided a pressing portion 238 (see Fig. 14A) which is formed by an upper roller 240 and a lower roller 242 at an upstream side of the cutting portion 236.

As seen from Fig. 14B, a cutting upper blade 234 for forming the cutting portion 236 of the eighth embodiment is formed substantially in the same configuration as the cutting upper blade 216 of the seventh embodiment. Correspondingly, a lower blade 232 is formed by two cutting lower blades 215, which are separated by a fixed distance and each of which is formed substantially in a cylindrical shape or a column shape. An enlarged radius portion 270 whose radius is gradually increased is formed at the sides (at the respective inner sides) of the cutting lower blades 215 facing each other. (Further, the cutting lower blades 215 can be formed into the same configuration as the cutting lower blades 214 of the seventh embodiment).

A pressing portion 244, which as a whole is formed substantially in a disk shape and which has a fixed radius and a width (i.e., an axial length) W2 at an axial direction central portion of the pressing portion 244, is formed at the upper roller 240 for forming the pressing portion 238. From the axial direction sides of the pressing portion 244, there are formed inclination portions 246 each of which is formed in a flat conical shape whose diameter is gradually made to decrease toward the tip end thereof. The outer peripheral surface of each of the inclination portions 246 is formed with a predetermined configuration such that the lowermost portion thereof is made to incline at a fixed angle of incline θ1 with respect to the top surface 12A of the web 12.

The lower roller 242 is formed by two receiving rollers 248 which are disposed so as to be spaced apart from each other by a fixed distance. Each of the receiving rollers 248 is formed in a cylindrical shape (or a column shape) having a fixed radius. A distance between these receiving rollers 248 can be appropriately selected in accordance with the configuration of the PS plate 30 which is the finished product. Further, the distance between the receiving rollers 248 allows a material for the web 12 which has been pressed and deformed by the upper roller 240 to flow, thus forming an escape portion 250 into which a portion of the material (aluminum) enters.

In the planographic printing plate cutting device 230 of the eighth embodiment which has been structured as described above, as shown in Fig. 14A, at the pressing section, the web 12 is first conveyed while being supported by the lower roller 242, and at this time, the web 12 is pressed by the upper roller 240, and a concave portion 75 having inclined surfaces 76 is thereby formed at the web 12.

Next, the web 12 is cut at the cutting portion 236 at positions on the inclined surfaces 76. Therefore, since the inclined portion 36 is formed at each of the cut edge of the PS plate 30 (see Fig. 4), ink-adhesion to the lengthwise cut edge of the PS plate 30 is prevented and thus the printing paper is not stained with the ink. As a result, print having excellent appearance can be maintained.

In the cutting portion 236, since the indentation 50 is formed at the rear surface 12B of the web 12, in the same manner as the PS plate 30 shown in Fig. 4, the tip end of the burr 52 does not protrude from the rear surface 12B of the web 12.

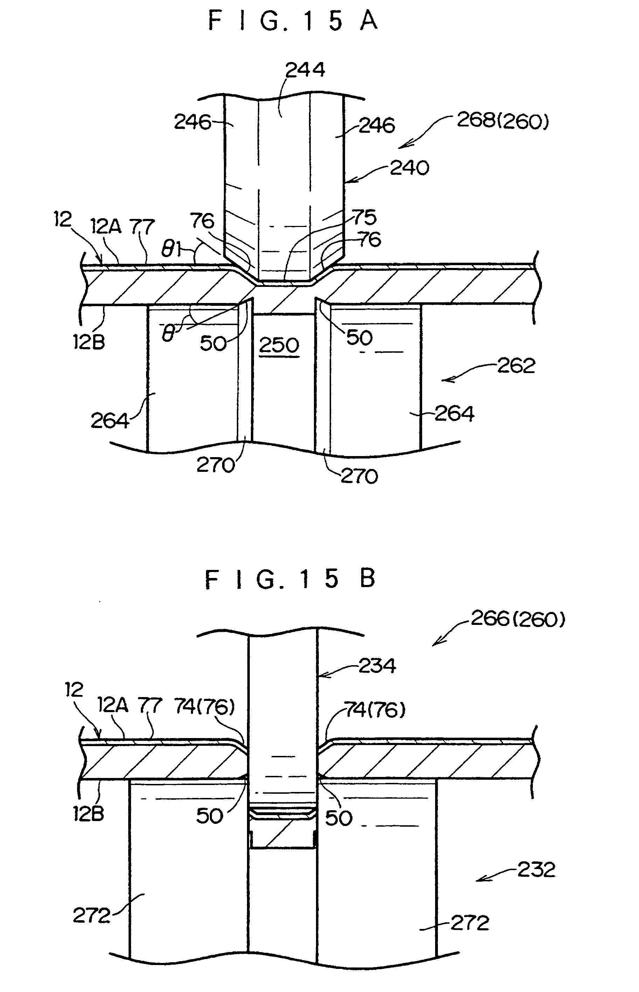

In Figs. 15A and 15B, respectively, there is shown a planographic printing plate cutting device 260 of a ninth embodiment. In the same manner as the planographic printing plate cutting device 230 of the eighth embodiment, the planographic printing plate cutting device 260 of the present embodiment has a pressing portion 268 and a cutting portion 266. However, as seen from Fig. 15A, at respective surface sides which face each other (the inner sides) of two receiving rollers 264 for forming a lower roller 262 of the pressing portion 268, is formed an enlarged radius portion 270 whose diameter is gradually increased. (Further, the receiving rollers 264 can have the same configuration as the cutting lower blades 214 of the seventh embodiment). Moreover, each of cutting lower blades 272 for forming the lower blade 232 of the cutting portion 266 is formed in a cylindrical shape (or a column shape) which has a fixed radius and has no enlarged radius portion 270. The ninth embodiment is structured in the same manner as the eighth embodiment except for such respects as described above.

In the planographic printing plate cutting device 260 of the ninth embodiment, the concave portion 75 is formed by the pressing portion 268 at the top surface 12A of the web 12, while the indentation 50 is formed by the enlarged radius portion 270 at the rear surface 12B of the web 12. Thereafter, the web 12 is cut at positions of the inclined surfaces 76 by the cutting portion 266. Accordingly, since the inclined portion 36 (see Fig. 4) is formed at the PS plate 30, ink adhering to the lengthwise cut edge portions of the PS plate 30 is prevented, and thus the printing paper does not have ink stains. As a result, print having excellent appearance can be maintained.

Even when the burr 52 is generated from the rear surface 12B of the web 12 at the cutting portion 266, since this burr 52 is generated from the indentation 50 which is formed at the pressing portion 268, the tip end of the burr 52 does not protrude from the rear surface 12B of the web 12 (see Fig. 4).

As in the sixth, eighth, and ninth embodiments, in a case in which the web 12 is cut at the widthwise direction central portion thereof, the indentation 50 does not necessarily need to be formed at both sides of the cut portions of the web 12. Namely, in a case in which one of the sides of the cut portion of the web 12 is used as a final product of the PS plate 30 or in a case in which no problem arises even when the burr 52 protrudes from the rear surface 12B, the indentation may be formed only at one of the sides of the cut portion of the web 12. In whichever case, by taking the position of the PS plate 30 which is obtained as a final product from the web 12 into consideration, the planographic printing plate cutting of the embodiments may be structured such that the indentation 50 is formed so as to correspond to the burr 52 which is generated, not at the cut portion of the web 12, but at the PS plate 30 side. Correspondingly, at the side of the web 12 at which the burr 52 is not generated, the angle of the tip portion of the cutting blade (with respect to the rear surface 12B of the web 12) is not particularly limited, and can be sharp or obtuse.

For example, as a manner of course, the slitter or the widthwise cutter in the first to the sixth embodiments can be applied to a case in which both sides of the cut portion of the web 12 are included in the final product of the PS plate 30. In this case, the slitter or the widthwise cutter can be structured so as to form the indentation 50 at both sides or one side of the cut portion of the web 12.

As described above, in a presensitized planographic printing plate cutter of the embodiments, at the cut edge portions (the lengthwise cut edge portions in the first to third embodiments) of the web 12, the indentation 50 is formed at the rear surface 12B of the web 12 (i.e., the surface at the opposite side of the light-sensitive layer 54) and the burr 52 is generated from this indentation 50. Accordingly, the burr 52 does not protrude from the rear surface of the PS plate 30 which has been cut into a desired configuration. For this reason, for example, such problems of the PS plate 30 meandering when conveyed inside the exposure device, and the burr 12 breaking and falling to thereby form debris do not arise. As a result, the PS plate 30 which facilitates handling can be obtained.

Since the inclined portion 36 is generated at the surface of the PS plate 30, during the printing, an excessive amount of ink does not adhere to the edge portions of the PS plate 30, thus ink is not transferred onto printing paper. As a result, prints of high commercial value can be maintained.

As in the first, second, fourth, and sixth to ninth embodiments, in a case in which a portion of a secondary cutting blade (the lower blade 24, the lower blade 64, the cutting lower blade 114, the lower blade 190, and the cutting lower blade 214), or the enlarged radius portion 270 of the lower roller 262 is formed so as to be inclined at a predetermined angle of incline 9 with respect to the rear surface 12B of the web 12, the angle of incline 9 is preferably within a range of
5° ≤ θ ≤ 60°.

Namely, by making the angle of incline θ 5° or more, the depth of the indentation 50 can be reliably ensured. Further, by making the angle of incline θ 60° or less, since the cutting edge (the tip portion) of each of the lower blade 24, the lower blade 64, the cutting lower blade 114, the lower blade 190, and the cutting lower blade 214, or the lower roller 262 is made to have high strength, these blades are not broken in spite of repeated use.

The above-described angle of incline θ is determined by a relative positional relationship between the contact surface of the second cutting blade and the rear surface 12B of the web 12. Accordingly, during the widthwise or lengthwise cutting of the web 12, for example, when a risen portion is generated on the web 12 due to the shearing force, in the same manner as the fifth embodiment, the angle of incline θ is defined as an angle between the rear surface 12B of the web 12 and the contact surface of the second cutting blade in a state in which the web 12 is raised.

The materials of the first cutting blade and the second cutting blade in each of the embodiments are not particularly limited provided that the blades can reliably cut the web 12. However, tool materials used for a metal processing such as a die steel, a high speed steel, and a super steel can be used. A surface roughness of each of these materials is preferably within a range of
0.1S ≤ Rₘₐₓ ≤ 3.2S°, wherein a maximum height (Rₘₐₓ) is specified in JIS B0601. Further, the surface of each of these tool materials may be coated.

The structure for inclining the contact surface of the second cutting blade with respect to the rear surface 12B of the web 12 is not limited to the above-described structure. For example, a lower blade may be formed in a cylindrical or column shape, and by disposing the rotation axis of the lower blade so as to be inclined, the contact surface of the lower blade (the contact surface of the lower blade with the web 12) may be inclined with respect to the rear surface 12B of the web 12.

Alternatively, a portion of the web 12 in the vicinity of the cut edge thereof may be supported by a supporting member such as a supporting platform which is formed so as to be inclined at a predetermined angle of incline θ in advance. Here, the rear surface of the web 12 can be inclined with respect to the lower blade or the cutting lower blade.

In the above-description, the slitter which cuts the web 12 in the lengthwise direction thereof and the cutter which cuts the web 12 in the widthwise direction thereof have been explained in respective embodiments. However, one of the slitters from the first to third embodiments, and from the sixth to ninth embodiments, and the cutter in the fourth embodiment or the fifth embodiment can both be provided in a single processing line.
The planographic printing plate cutting device and a cutting method of the planographic printing plate according to the embodiments can be applied not only to such a processing line as described above in which a web, which has been coated with a light-sensitive layer and taken up in a roll, is sequentially rolled out and processed, but also to processing lines incorporating various steps such as a processing line in which the web, having been coated with the light-sensitive layer, is processed in succession without being taken up, and a processing line in which the web, having been processed, is taken up in a roll, and further, to a processing in which the web, having been cut into a master sheet, is cut in a lengthwise direction thereof in a sheet form so as to correspond to the appropriate dimensions for final shipment. In the form of conveyance of the web 12, the present invention is not necessarily applied only to a processing line in which the web 12 is conveyed such that the light-sensitive layer 54 is the uppermost layer, but also, to a processing line in which the web 12 is conveyed such that the light-sensitive layer 54 is the lowermost layer. Further, the embodiments can be applied to a processing line in which the web 12 is conveyed at a longitudinal position thereof such that the widthwise direction of the web 12 is a vertical direction. In brief, the form of conveyance of the web 12 is not particularly limited provided that the web 12 and the contact surface of the second cutting blade satisfy such a relative positional relationship as described above.

In addition, the planographic printing plate cutting device and the planographic printing plate cutting method of the present invention may be applied to an aluminum coil before a surface treatment is applied thereto or before the light-sensitive layer 54 is coated thereon. Further, desensitization treatment can be applied to the PS plate 30 of the present application before or after the development treatment thereof.

## Claims

1. A device (180,230,260) for cutting a planographic printing plate (30) having opposite surfaces (12B,54), comprising:
(a) a first cutting blade (22,116,136,182,216,234);
(b) a second blade (24,64,84,114,134,190,212,214,232,215), wherein said planographic printing plate is receivable between said blades for cutting, said blades are adapted to be directed towards opposite surfaces of said plate and offset in a direction parallel to a printing surface of said printing plates and transverse to a cutting direction,
**characterized by** an indentation forming section situated only on one side of said planographic printing plate and adapted to press against a non-printing side of said plate as said plate is being cut, thereby forming in said non-printing side of said plate an indentation (50).

2. A device according to claim 1,**characterized in that** said indentation forming section has a sloped surface (48,70,118,192) and is provided on one of said blades, and said sloped surface of said indentation forming section is adapted to incline towards a printing surface (12B) of said plate, as said plate is being cut.

3. A device according to claim 1 or 2, **characterized by** a holding section for holding said plate at an inclination relative to said cutting blades as said plate is being cut.

4. A device according to claim 3, **characterized in that** said holding section is adapted to dispose said cutting blades such that said plate is held in an inclined state due to shearing force generated between said first cutting blade and said second cutting blade when said plate is being cut.

5. A device according to one of the claims 2 to 4, **characterized in that** said sloped surface of said indentation forming section is inclined at a predetermined angle (θ) with respect to said printing surface of said plate.

6. A device according to claim 5, **characterized in that** said indentation forming section is adapted to produce a burr (52) having an end tip, wherein said burr is disposed in said indentation and said predetermined angle is set such that said end tip remains along an inner portion of said indentation.

7. A device according to claim 5 or 6, **characterized in that** said predetermined angle is set from 5 to 60 degrees.

8. A device according to one of the claims 1 to 7, **characterized in that** said indentation forming section is adapted to form an inclined portion (36,74) in said plate, when said plate is being cut, and to provide a cut edge at said plate after cutting, wherein said inclined portion extends along said cut edge and comprises a thickness which decreases toward said cut edge surface.

9. A device according to one of the claims 1 to 8, **characterized by** a pressing portion (238,244,268) adapted to press, before cutting, along a vicinity where cutting occurs on said plate and to form a concave portion (75) therein.

10. A device according to claim 9, **characterized in that** said pressing portion comprises an upper roller (240) and a lower roller (242), wherein said rollers are adapted to direct towards opposite surfaces of said plate.

11. A device according to claim 10, **characterized in that** said upper roller is adapted to form said concave portion having a bottom portion generally parallel to a surface of said plate, and inclined portions (76) extending continuously from said plate surface to said bottom portion.

12. A device according to claim 10 or 11, **characterized in that** said lower roller comprises two receiving rollers (248,264) spaced apart from one another.

13. A device according to one of the claims 10 to 12, **characterized in that** said indentation forming section is provided at said lower roller.

14. A device according to claim 1, **characterized in that** said indentation is formed on an edge of said non-printing side of said plate.

15. A method of cutting a planographic printing plate (30) comprising the step of:
(a) cutting said plate between a pair of cutting blades (22,116,136,182,216,234; 24,64,84,114,134,190,212,214,232,215);
**characterized by** the steps of:
(b) forming an indentation (50) in said plate,
(c) offsetting, in the step of cutting (a), the cutting blades from each other in a direction parallel to a printing surface of said printing plate and transverse to a cutting direction, and
(d) producing a burr (52) in a region of said indentation by said step of cutting (a).

16. A method according to claim 15, **characterized by** the steps of forming an inclined portion (36,74) while cutting and a cutting edge surface on said plate after cutting, wherein said inclined portion is provided along said cutting edge surface and has a thickness decreasing towards said cutting edge.

17. A method according to claim 15 or 16, **characterized by** the steps of pressing and deforming a non-printing surface of said plate by using a surface of said cutting blades, so that a thickness of said plate gradually decreases toward a location where cutting occurs on said plate, as sub-steps of said step of forming said indentation.

18. A method according to one of the claims 15 to 17, **characterized by** the step of controlling pressing and deformation to cause an end tip of said burr to remain along an inner portion of an edge of said plate.

19. A method according to one of the claims 15 to 18, **characterized by** the step of forming a concave portion (75) in said plate before cutting by pressing along a vicinity where cutting occurs on said plate.

20. A method according to claim 15, **characterized in that** by the step of forming said indentation (b) said indentation is formed on an edge of a non-printing side of said plate.

## Patentansprüche

1. Vorrichtung (180, 230, 260) zum Schneiden einer Flachdruckplatte (30), die gegenüberliegende Oberflächen (12B, 54) hat, die aufweist:
(a) ein erstes Schneidemesser (22, 116, 136, 182, 216, 234);
(b) ein zweites Schneidemesser (24, 64, 84, 114, 134,190,212,214,232, 215), wobei die Flachdruckplatte (30) zum Schneiden zwischen den Messern aufnehmbar ist, die Messer vorgesehen sind, um in die Richtung zu den gegenüberliegenden Oberflächen der Platte gerichtet und in eine Richtung parallel zu einer Druckoberfläche der Druckplatten versetzt und quer zu einer Schneidrichtung zu sein, **gekennzeichnet durch** einen Einschnitt bildenden Abschnitt, angeordnet nur auf einer Seite der Flachdruckplatte und vorgesehen, um gegen eine Nicht- Druckseite der Platte, wenn die Platte geschnitten wird, zu drücken, um **dadurch** in der Nicht- Druckseite der Platte einen Einschnitt (50) zu bilden.

2. Vorrichtung nach Anspruch 1, **dadurch gekennzeichnet, dass** der einen Einschnitt bildende Abschnitt, eine geneigte Oberfläche (48, 70, 118, 192) hat und an einem der Messer vorgesehen ist, und die geneigte Oberfläche des einen Einschnitt bildenden Abschnittes, vorgesehen ist, sich in der Richtung einer Druckoberfläche (12B) der Platte, wenn die Platte geschnitten wird, zu neigen.

3. Vorrichtung nach Anspruch 1 oder 2, **gekennzeichnet durch** den Halteabschnitt zum Halten der Platte an einer Neigung relativ zu den Schneidemessem, wenn die Platte geschnitten wird.

4. Vorrichtung nach Anspruch 3, **dadurch gekennzeichnet, dass** der Halteabschnitt vorgesehen ist, die Schneidemesser derart anzuordnen, dass die Platte in einem geneigten Zustand infolge der Scherkraft, erzeugt zwischen dem ersten Schneidemesser und dem zweiten Scheidemesser, gehalten wird, wenn die Platte geschnitten wird.

5. Vorrichtung nach einem der Ansprüche 2 bis 4, **dadurch gekennzeichnet, dass** die geneigte Oberfläche des Einschnitt bildenden Abschnittes, in einem vorbestimmten Winkel (θ) in Bezug auf die Druckoberfläche der Platte geneigt ist.

6. Vorrichtung nach Anspruch 5, **dadurch gekennzeichnet, dass** der Einschnitt bildenden Abschnittes, vorgesehen ist, einen Grat (52) zu erzeugen, der eine Endspitze hat, wobei der Grat in dem Einschnitt angeordnet ist und der vorbestimmte Winkel derart festgelegt ist, dass die Endspitze entlang eines Innenabschnittes des Einschnitts verbleibt.

7. Vorrichtung nach Anspruch 5 oder 6, **dadurch gekennzeichnet, dass** der vorbestimmte Winkel von 5 bis 60 Grad festgelegt ist.

8. Vorrichtung nach einem der Ansprüche 1 bis 7, **dadurch gekennzeichnet, dass** der Einschnitt bildende Abschnitt, vorgesehen ist, einen geneigten Abschnitt (36, 74) in der Platte zu bilden, wenn die Platte geschnitten wird, und um eine Schnittkante an der Platte nach dem Schneiden zu bilden, wobei sich der geneigte Abschnitt entlang der Schnittkante erstreckt und eine Dicke aufweist, die sich in die Richtung zu der Schnittkantenoberfläche vermindert.

9. Vorrichtung nach einem der Ansprüche 1 bis 8, **gekennzeichnet durch** einen Pressabschnitt (238, 244, 268), vorgesehen um vor dem Schneiden entlang einer Nähe zu pressen, wo das Schneiden in die Platte stattfindet, und um darin einen konkaven Abschnitt (75) zu bilden.

10. Vorrichtung nach Anspruch 9, **dadurch gekennzeichnet, dass** der Pressabschnitt eine obere Walze (240) und eine untere Walze (242) aufweist, wobei die Walzen vorgesehen sind, sich in Richtung zu den gegenüberliegenden Oberflächen der Platte zu richten.

11. Vorrichtung nach Anspruch 10, **dadurch gekennzeichnet, dass** die obere Walze vorgesehen ist, den konkaven Abschnitt zu bilden, der einen Bodenabschnitt im wesentlichen parallel zu einer Oberfläche der Platte hat, und geneigte Abschnitte (76), die sich kontinuierlich von der Plattenoberfläche zu dem Bodenabschnitt erstrecken.

12. Vorrichtung nach Anspruch 10 oder 11, **dadurch gekennzeichnet, dass** die untere Walze zwei voneinander beabstandete Aufnahmewalzen (248, 264) aufweist.

13. Vorrichtung nach einem der Ansprüche 10 bis 12, **dadurch gekennzeichnet, dass** der Einschnitt bildende Abschnitt, an der unteren Walze vorgesehen ist.

14. Vorrichtung nach Anspruch 1, **dadurch gekennzeichnet, dass** der Einschnitt an einer Kante der Nicht- Druckseite der Platte gebildet ist.

15. Verfahren zum Schneiden einer Flachdruckplatte (30), das die Schritte aufweist, von:
(a) Schneiden der Platte zwischen einem Paar von Schneidemessem (22, 116, 136, 182, 216, 234 24; 24, 64, 84, 114, 134,190,212,214,232, 215); **gekennzeichnet durch** die Schritte von:
(b) Bilden eines Einschnitts (50) in der Platte,
(c) Versetzen, in dem Schritt des Schneidens (a), der Schneidemesser voneinander in eine Richtung parallel zu einer Druckoberfläche der Druckplatte quer zu einer Schnittrichtung, und
(d) Erzeugen eines Grates (52) in einem Bereich des Einschnitts **durch** den Schritt des Schneidens (a).

16. Verfahren nach Anspruch 15, **gekennzeichnet durch** die Schritte des Bildens eines geneigten Abschnittes (36, 74) während des Schneidens und einer Schnittkantenoberfläche an der Platte nach dem Schneiden, wobei der geneigte Abschnitt entlang der Schnittkantenoberfläche vorgesehen ist und eine Dicke hat, die sich in der Richtung zu der Schnittkante vermindert.

17. Verfahren nach Anspruch 15 oder 16, **gekennzeichnet durch** die Schritte von Pressen und Verformen einer Nicht- Druckoberfläche der Platte **durch** Verwenden einer Oberfläche der Schneidemesser, so dass sich eine Dicke der Platte allmählich in die Richtung eines Ortes vermindert, wo das Schneiden an der Platte passiert, als Unterschritte des Schrittes des Bildens des Einschnittes.

18. Verfahren nach einem der Ansprüche 15 bis 17, **gekennzeichnet durch** den Schritt des Steuerns des Pressens und des Verformens, um eine Endspitze des Grates zu veranlassen, entlang eines inneren Abschnittes einer Kante der Platte zu verbleiben.

19. Verfahren nach einem der Ansprüche 15 bis 18, **gekennzeichnet durch** den Schritt des Bildens eines konkaven Abschnittes (75) in der Platte vor dem Schneiden **durch** Pressen entlang einer Nähe, wo das Schneiden an der Platte stattfindet.

20. Verfahren nach Anspruch 15, **dadurch gekennzeichnet, dass** durch den Schritt des Bildens des Einschnittes (b), wobei der Einschnitt an einer Kante der Nicht-Druckseite der Platte gebildet wird.

## Revendications

1. Dispositif (180, 230, 260) pour couper un cliché ou une plaque-- d'impression planographique (30) ayant des surfaces opposées (12B, 54), comprenant :
(a) une première lame de coupe (22, 116, 136, 182, 216, 234);
(b) une deuxième lame (24, 64, 84, 114, 134, 190, 212, 214, 232, 215),
dans lequel la dite plaque d'impression planographique peut être reçue entre les dites lames pour une coupe, les dites lames sont disposées de manière à être dirigées vers les surfaces opposées de la dite plaque et décalées dans une direction parallèle à une surface d'impression des dites plaques d'impression et transversale à une direction de coupe,
**caractérisé par** une partie de formation d'indentation située sur un seul côté du dit cliché d'impression et prévue pour presser contre un côté de non impression de la dite plaque pendant la coupe de la dite plaque, de manière à former une indentation (50) dans le dit côté de non impression de la dite plaque.

2. Dispositif selon la revendication 1, **caractérisé en ce que** la dite partie de formation d'indentation présente une surface inclinée (48, 70, 118, 192) et est prévue sur une des dites lames, et la dite surface inclinée de la dite partie de formation d'indentation est disposée de manière à s'incliner vers une surface d'impression (12B) de la dite plaque, pendant la coupe de la dite plaque.

3. Dispositif selon la revendication 1 ou 2, **caractérisé par** une partie de maintien pour maintenir la dite plaque à une inclinaison par rapport aux dites lames de coupe pendant la coupe de la dite plaque.

4. Dispositif selon la revendication 3, **caractérisé en ce que** la dite partie de maintien est prévue pour disposer les dites lames de coupe de sorte que la dite plaque est tenue dans un état incliné du fait de la force de cisaillement engendrée entre la dite première lame de coupe et la dite deuxième lame de coupe pendant la coupe de la dite plaque.

5. Dispositif selon une des revendications 2 à 4, **caractérisé en ce que** la dite surface inclinée de la dite partie de formation d'indentation est inclinée suivant un angle prédéterminé (θ) par rapport à la dite surface d'impression de la dite plaque.

6. Dispositif selon la revendication 5, **caractérisé en ce que** la dite partie de formation d'indentation est prévue pour engendrer une barbe (52) ayant une pointe d'extrémité, dans lequel la dite barbe est disposée dans la dite indentation et le dit angle prédéterminé est choisi de sorte que la dite pointe d'extrémité reste le long d'une région intérieure de la dite indentation.

7. Dispositif selon la revendication 5 ou 6, **caractérisé en ce que** le dit angle prédéterminé est fixé entre 5 et 60 degrés.

8. Dispositif selon une des revendications 1 à 7, **caractérisé en ce que** la dite partie de formation d'indentation est prévue pour former une région inclinée (36, 74) dans la dite plaque, pendant la coupe de la dite plaque, et pour créer un bord latéral coupé sur la dite plaque après la coupe, dans lequel la dite région inclinée s'étend le long du dit bord coupé et présente une épaisseur qui diminue vers la dite surface de bord coupé.

9. Dispositif selon une des revendications 1 à 8, **caractérisé par** un moyen de pression (238, 244, 268) prévu pour exercer une pression, avant la coupe, le long d'une région voisine de l'endroit où la coupe a lieu sur la dite plaque, et pour former une région concave (75) à cet endroit.

10. Dispositif selon la revendication 9, **caractérisé en ce que** le dit moyen de pression comprend un rouleau supérieur (240) et un rouleau inférieur (242), dans lequel les dits rouleaux sont disposés de manière à être dirigés vers les surfaces opposées de la dite plaque.

11. Dispositif selon la revendication 10, **caractérisé en ce que** le dit rouleau supérieur est prévu pour former la dite région concave ayant une région de fond sensiblement parallèle à une surface de la dite plaque, et des régions inclinées (76) s'étendant de façon continue de la dite surface de plaque à la dite région de fond.

12. Dispositif selon la revendication 10 ou 11, **caractérisé en ce que** le dit rouleau inférieur comprend deux rouleaux de réception (248, 264) mutuellement espacés.

13. Dispositif selon une des revendications 10 à 12, **caractérisé en ce que** la dite partie de formation d'indentation est prévue sur le dit rouleau inférieur.

14. Dispositif selon la revendication 1, **caractérisé en ce que** la dite indentation est formée sur un bord du dit côté de non impression de la dite plaque.

15. Procédé pour couper un cliché ou une plaque d'impression planographique (30), comprenant l'étape de :
(a) coupe de la dite plaque entre deux lames coupantes (22, 116, 136, 182, 216, 234 ; 24, 64, 84, 114, 134, 190, 212, 214, 232. 215) ;
**caractérisé en ce qu'**il comprend les étapes de :
(b) formation d'une indentation (50) dans la dite plaque,
(c) décalage, dans l'étape de coupe (a), des lames coupantes l'une de l'autre dans une direction parallèle à une surface d'impression de la dite plaque d'impression et transversale à une direction de coupe, et
(d) production d'une barbe (52) dans une région de la dite indentation par la dite étape de coupe (a).

16. Procédé selon la revendication 15, **caractérisé par** les étapes de formation d'une région inclinée (36, 74) pendant la coupe et d'une surface de bord de coupe sur la dite plaque après la coupe, dans lequel la dite région inclinée est prévue le long de la dite surface de bord de coupe et elle a une épaisseur qui diminue vers le dit bord de coupe.

17. Procédé selon la revendication 15 ou 16, **caractérisé par** les étapes de pressage et déformation d'une surface de non impression de la dite plaque par utilisation d'une surface des dites lames coupantes, de sorte qu'une épaisseur de la dite plaque diminue progressivement vers un endroit où la coupe a lieu sur la dite plaque, comme sous-étapes de la dite étape de formation de la dite indentation.

18. Procédé selon une des revendications 15 à 17, **caractérisé par** l'étape de réglage du pressage et de la déformation de façon à ce qu'une pointe d'extrémité de la dite bavure reste le long d'une région intérieure d'un bord de la dite plaque.

19. Procédé selon une des revendications 15 à 18, **caractérisé par** l'étape de formation d'une région concave (75) dans ladite plaque, avant la coupe, par pressage le long d'une région voisine où la coupe a lieu sur la dite plaque.

20. Procédé selon la revendication 15, **caractérisé en ce que**, par l'étape de formation de la dite indentation (b), la dite indentation est formée sur un bord d'un côté de non-impression de la dite plaque.
